# EUROPEAN PATENT SPECIFICATION

(11) **EP 3 354 870 B1**
(45) Date of publication and mention of the grant of the patent: **19.05.2021**
(21) Application number: 18161024.7
(22) Date of filing: 10.11.2015
(51) Int. Cl.: F01M 11/00, B63H 20/28, F16H 57/04, F01P 11/08, B63H 23/02, F16H 7/02, B63H 20/14, B63H 20/00

(54) **AN OUTBOARD MOTOR**
AUSSENBORDMOTOR
MOTEUR HORS-BORD

(43) Date of publication of application: 01.08.2018
(62) Divisional of application: 15193847.9
(73) Proprietor: OXE Marine AB, 256 68 Helsingborg (SE)
(72) Inventor: Blomdahl, Andreas, 262 63 Ängelholm (SE); Stålhammar, Heinz, 302 70 Halmstad (SE)
(74) Representative: Ström & Gulliksson AB

(56) References cited:
- US-A- 4 992 066
- US-A- 5 037 340
- US-A1- 2013 273 792
- US-B1- 7 806 740

## Description

### FIELD OF THE INVENTION

The present invention relates to an outboard motor. More specifically the present invention relates to an outboard motor comprising an engine a gearbox and a propeller. Outboard motors are self-contained propulsion and steering devices for boats and are arranged to be fastened to the outside of a transom of a boat.

### PRIOR ART

A plurality of outboard motors for boats are disclosed in the prior art. One type of such prior art outboard motors comprise an engine having a horizontal or substantially horizontal crankshaft for output torque from the engine. The output torque is transferred to a gearbox and further to a propeller shaft for rotating the propeller. According to the prior art torque is transferred from the crankshaft to a transmission drive shaft through pinions, chains, a belt or similar.

Even though such a structure has a plurality of advantages over other types of devices for transferring torque from an outboard engine to a gearbox, such as bevel gears, vertical shafts and similar, further improvements are favorable. Such improvements can relate to increasing the ability to transfer torque and increasing the reliability of the structure as well as reducing noise.

US2013/273792A1 discloses an outboard motor having an engine with a substantially horizontal crankshaft and a separate oil reservoir located below the engine.

US7806740B1 discloses an outboard motor with a separate oil reservoir located below the engine.

### BRIEF DESCRIPTION OF THE INVENTION

One object of the present invention is to provide an outboard motor according to claim 1. Disclosed is also a reliable outboard motor with improved ability to transfer torque. The outboard motor according to the disclosure provides an efficient and strong power transmission. Simultaneously the outboard motor according to some embodiments of the invention operates with reduced noise levels compared to many prior art outboard motors.

The structure with an oil pan having outlets to an oil reservoir results in efficient and reliable circulation of oil. Such a sump system can be called a semi drysump system. The oil pan can comprise two or more outlet openings, e.g. at opposite ends or at different locations inside the oil pan, resulting in reliable evacuation of oil to the oil reservoir even when the outboard motor is tilted in different directions, such as backward or forward. The oil reservoir can be arranged separately from the oil pan and below the oil pan, wherein oil can be collected in the oil pan and flow to the oil reservoir by means of gravity. The engine or the outboard motor can comprise a single oil pump for pumping motor oil from the oil reservoir to the engine. Hence, the internal conventional oil pump of this type of engines, such as standard type automotive internal combustion engines having a plurality of cylinders, can be used for pumping the oil from the oil reservoir to the engine. The sump system comprising the oil pan with the outlet openings connected to the oil reservoir allows for rolling in heavy seas, tilting and trimming without compromising oil supply to the engine.

Disclosed is also, according to an example being not part of the invention, an outboard motor comprising an engine, a gearbox and a propeller connected to a propeller shaft, wherein the engine comprises a crankshaft connected to a transmission drive shaft of the gearbox through a first power transfer device, characterised in that the first power transfer device comprises a toothed belt arranged in a housing, that the housing comprises a first cavity provided with the belt and a first cooling liquid for contacting the belt, and that the housing comprises a second cavity separated from the first cavity, wherein the second cavity is provided with a second cooling liquid. The first cooling liquid can be oil and the second cooling liquid can be water. Efficient cooling is provided for the belt and moving parts, which results in a highly durable and efficient structure that can transfer high rotational power. Further, the belt and moving parts, such as pulleys and bearings, are in the separate first cavity, which is provided with the first cooling liquid, such as the oil, that reduces noise and provides a smooth and safe operation therein. It is also believed that the outboard motor as described herein can handle greater torsional vibrations due to the first cavity being provided with the first cooling liquid, such as oil.

Hence, the first power transfer device can have cavities for both cooling water and oil. The first cavity where the belt is located is separated from the second cavity for cooling water. By adding a water flow to a water inlet, e.g. at the top of the housing, the heat generated by bearings, seals and the belt itself is cooled and kept at a favorable operating temperature. The oil acts as a heat distributer for the heat from parts, such as belt, pulleys, seals and bearings, to the belt housing and is also acting as lubricant for bearings, seals and belt. The second cavity for cooling water can have fins to increase the surface of the belt housing that is exposed for the cooling water, which increase the heat transfer. The first cavity have fins that increases the surface of the belt housing that is exposed to the oil, resulting in an increase of heat transferred from the oil to the belt housing. The fins in the first cavity also act as separator of the oil to lower the turbulence energy in the oil, resulting in lowering power losses and heat generated by turbulence.

In prior art devices noise is mainly generated when the belt meets the pulley and the air between the teeth and the grooves is pressed out. According to one aspect of this disclosure this noise is dampened by the oil and the belt housing prevents the sound for reaching the surrounding environment.

The first power transfer device can comprise bearings, such as bearings mounted on the pulleys. For example, a first bearing or a first bearing set is mounted on the first pulley, and a second bearing or a second bearing set is mounted on the second pulley. For example two bearings are mounted on each of the pulleys. The bearings can be provided with a liquid proof sealing for sealing the first cavity. By sealing the first cavity from the surrounding environment the parts inside the first cavity, such as the belt, pulleys and the bearings, are protected from water, salt, dust, particles and similar. Hence, non-stainless parts, such as bearings, can be used, which can handle higher stress than stainless parts. The first cavity can be sealed by a minimum of seals, such as only two radial seals, which reduces friction.

The housing can comprise a bracket and a lid, wherein the second cavity can be arranged inside the bracket. The crankshaft can extend through a first aperture formed in the bracket, and the transmission drive shaft can extends through a second aperture formed in the bracket. Hence, the second cavity with the second cooling liquid can be formed around the crankshaft and transmission drive shaft or corresponding bearings for providing efficient cooling of said parts.

A first pulley and a second pulley can be arranged inside the housing, wherein the belt is connected to the first and second pulleys. The size of the first pulley can be different from the size of the second pulley for providing the desired gear ratio. The first power transfer device can be arranged with a rotational symmetry, so that the first power transfer device with the pulleys and the belt arranged inside the housing can be detached, rotated 180 degrees and then connected to the crankshaft and transmission drive shaft again to alter the positions of the first and second pulleys. Hence, the gear ratio can easily be changed by turning the first power transfer device upside down. Hence, the structure of the first power transfer device allows a user to change the gear ratio to fit various demands and driving styles. Depending on the needs of the operator high acceleration or high speed can be selected. The first power transmission device can be arranged as a distinct or separate unit that is easy changeable. The two belt pulleys can have similar splines resulting in that the first power transfer device can be pulled off the splined shafts and then the first power transfer device can be turned 180° and pushed back on the crankshaft and transmission drive shaft being splined. Since the pulleys have different number of teeth the gear ratio will be changed when the first power transfer device is turned around. A reason for doing this is for switching between high torque and high speed. For example when you first want to go with high speed with a boat to rescue another boat, and on the way back to shore you want to tow the other boat and you need high torque.

The housing can be provided with belt guides extending into the first cavity for guiding the belt. For example two belt guides are arranged on opposite sides of the housing, wherein one of said belt guides is arranged on the slack side of the belt. The belt guides can be fixed belt guide surfaces on the internal periphery of the housing in the first cavity. Due to the design and the belt guides, the first power transfer device is equally strong in both directions and can be rotated 180 degrees without risking tooth climb or tooth jump. Further a lower belt tension can be used due to the belt guides. When the first power transfer device is rotated 180 degrees the other of the two belt guides are on the slack side of the belt.

A distance between a centre of the first pulley and a centre of the second pulley can be fixed. According to one embodiment the first power transfer device is arranged without a tensioner pulley, and with a fixed center to center distance of the pulleys. Instead of a tensioner pulley or an adjustable center to center distance there are fixed belt guiding surfaces in the belt housing. These are acting as a guide for the belt on the slack side to keep the belt engaged with the pulleys. With the belt guide the backside of the belt slides against the surface and keeps the belt in place on the pulleys when required. Normally the belt and the belt guides can be arranged so that the belt is not touching the guide surface, and so that the belt is only touching the belt guide when the belt is so extended that it would risk that the belt starts to climb on the pulleys. Since the first power transfer device has an amount of oil in the first cavity, in which first cavity the belt is arranged, there will be an oil film between the belt and the belt guide surface resulting in a negligible friction between these. Because of the guides a lower belt tension can be used compared to other belt transmissions, this resulting in easier assembly of the unit.

The pulleys can be arranged on conical bearings. Belt tension can be achieved when assembling the first power transfer device and the belt and pulleys are mounted in the housing. When the angled bearing surfaces of the conical bearings are pushed into position the axles will align to the correct center-center distance, and thus achieving the desired belt tension. No special tools are needed to assemble or disassemble the first power transfer device.

The first power transfer device can be connected to the remaining parts of the outboard motor by means of a flexible coupling, such as rubber bushings. This lowers the stress in shafts and pulleys which can be the caused by small misalignment due to tolerance errors in manufacturing or assembly of the parts. Since the first power transfer device can be self-contained with bearings mounted into the belt housing, there will be no resulting radial forces from the belt acting on the incoming shafts or coupling, only momentum will be transferred. Therefore there can be a flexible coupling mounted between a rubber mounted engine or gearbox and the first power transfer device. The flexible coupling cannot handle radial forces but can withstand small radial movement and high rotational vibrations from the engine without transferring these to the gearbox.

Also disclosed, according to an example being not part of the invention, is an outboard motor comprising an engine, a gearbox and a propeller connected to a propeller shaft, wherein the engine comprises a crankshaft connected to a transmission drive shaft of the gearbox through a first power transfer device, wherein an output drive shaft of the gearbox is connected to the propeller shaft through a second power transfer device characterised in that the gearbox is connected to a first output drive shaft and a second output drive shaft, that the second power transfer device comprises a first belt connected to the first output drive shaft, and a second belt connected to the second drive shaft, and that the first belt is connected to a first propeller shaft, and the second belt is connected to a second propeller shaft, said first and second propeller shafts being arranged to rotate in opposite directions. Hence, the outboard motor can be arranged with dual counter rotating coaxial propellers, which sometimes also is called a duoprop system, and a reliant, durable and efficient, high torque power transmission that is hydrodynamic and operates at reduced noise levels. The outboard motor can comprise dual output drive shafts, dual belts and dual concentric and counter rotating propeller shafts. The gearbox can comprise a forward gear and a reverse gear on each of the transmission drive shaft and the output drive shafts. The gearbox makes said first and second belts move in opposite directions, and thereby providing rotation of said dual concentric propeller shafts in opposite rotational directions.

Disclosed is also, according to an example being not part of the invention, a method for changing gear ratio of an outboard motor comprising an engine, a gearbox and a propeller connected to a propeller shaft, wherein the engine comprises a crankshaft connected to a transmission drive shaft of the gearbox through a first power transfer device, wherein an output drive shaft of the gearbox is connected to the propeller shaft through a second power transfer device, characterised in the steps of
a) detaching the first power transfer device from the remaining parts of the outboard motor, said first power transfer device including a housing with a belt connected to a first pulley and a second pulley, wherein the first and second pulleys are of different sizes,
b) pulling the first power transfer device along and away from the crankshaft and transmission drive shaft to disengage the first pulley and the second pulley from the crankshaft and the transmission drive shaft,
c) rotating the first power transfer device 180 degrees around a rotational symmetry center of the first power transmission device to change positions of the first and second pulleys in relation to the crankshaft and the transmission drive shaft,
d) pushing the first power transfer device onto the crankshaft and transmission drive shaft to engage the first and second pulleys therewith, and
attaching the first power transfer device to the remaining parts of the outboard motor.

The engine can be a diesel engine. The engine can be mounted horizontally, wherein the crankshaft extends substantially in parallel to the propeller shaft. Power can then be transferred from the engine to the gearbox through a primary belt and from the gearbox to the propeller shaft through another belt. The engine can be mounted on an engine support structure, such as an adapter plate, with mountings, such as robust anti-vibration mountings, to allow the outboard motor to endure punishing commercial use and to be easy to replace. E.g. four mountings can be used.

The engine can be a marinized automotive engine that provided quietness, effectiveness and high torque. For example, the engine has been redesigned to arrange all serve points on the front of the engine so that maintenance and service can be performed on the water, e.g. by a person standing on the boat. The engine can be a proven robust diesel engine mounted horizontally and marinized with a closed circuit coolant system. E.g. the engine allows for high power alternator and cabin heat. E.g. the engine is a turbo charged diesel engine with high pressure direct fuel injection. E.g. the engine has been converted for marine application by using separate systems for seawater, heat exchangers, intercooler and oil cooler and functionality that ensures that the engine, electrical system, fuel system and air intake will withstand marine conditions. For example, all service points are located at the front of the engine for easy access so service and service part replacement can be made directly from the boat by the users.

The belt drive of the disclosed outboard motor can allow for fully scalable torque transfer capability without affecting hydrodynamics. Further, the belt drive of the disclosed outboard motor result in a simple and reliable power transmission with few parts, resulting in an outboard motor with simplified maintenance.

The different aspects of the disclosed outboard motor can be combined. For example, two or more of the disclosed first power transfer device, the disclosed dual counter rotating propellers system and the disclosed semi drysump system can be combined.

The transmission drive shaft and the output drive shaft can be arranged substantially in parallel with the crankshaft. Further the crankshaft, the transmission drive shaft, the output drive shaft and the propeller shaft can be distributed along a common vertical plane to obtain a suitable distance between the shafts, wherein all shafts can be arranged substantially in parallel and in a common vertical plane.

According to an example being not part of the invention a structure is arranged for pinching legs of the second power transfer device in the form of an endless loop flexible drive coupling, together to reduce the cross-section of the outboard motor below the water line to reduce drag. Said structure can comprise curved surfaces bending the path of travel of the legs of the endless loop flexible drive coupling together to obtain a narrow and concave structure of the endless loop flexible drive coupling. For example, the endless loop flexible drive coupling is formed by one or more belts or chains or similar.

Further characteristics and advantages of the present invention will become apparent from the description of the embodiments below, the appended drawings and the dependent claims.

### SHORT DESCRIPTION OF THE DRAWINGS

The invention will now be described in more detail with the aid of exemplary embodiments and with reference to the accompanying drawings, in which
Fig. 1 is a schematic side view of an outboard motor according to one embodiment,
Fig. 2 is a schematic and partial section view of the outboard motor of Fig. 1, wherein an engine housing has been removed and a drive housing is illustrated in section,
Fig. 3 is a schematic side view of the outboard motor of Fig. 1, wherein the engine housing has been removed and a power coupling system for transferring torque from the engine to the propeller is illustrated schematically by means of dashed lines,
Fig. 4 is a schematic view of a torque transferring device for transferring torque from an engine crankshaft to a gearbox transmission drive shaft of the outboard motor according to one embodiment,
Fig. 5 is a schematic view of the torque transferring device according to Fig. 4, wherein a lid of a housing of said torque transferring device has been removed to illustrate a first cavity of the torque transferring device.
Fig. 6 is a schematic cross section perspective view of a part of the torque transferring device according to one embodiment, illustrating the first cavity and a second cavity of the torque transferring device,
Fig. 7 is a schematic cross section view of a part of the torque transferring device according to one embodiment, illustrating the first and second cavities of the torque transferring device,
Fig. 8 is a schematic section view of the torque transferring device according to one embodiment, illustrating the second cavity thereof,
Fig. 9 is a schematic an partial section view from the side of the outboard motor according to one embodiment,
Fig. 10 is a schematic view, partly in section, of a part of the outboard motor according to another embodiment, wherein an oil sump system is illustrated and power transfer parts, such as the first power transfer device, have been removed, and
Fig. 11 is a schematic perspective view from above of an oil pan of the oil sump system according to one embodiment.

### THE INVENTION

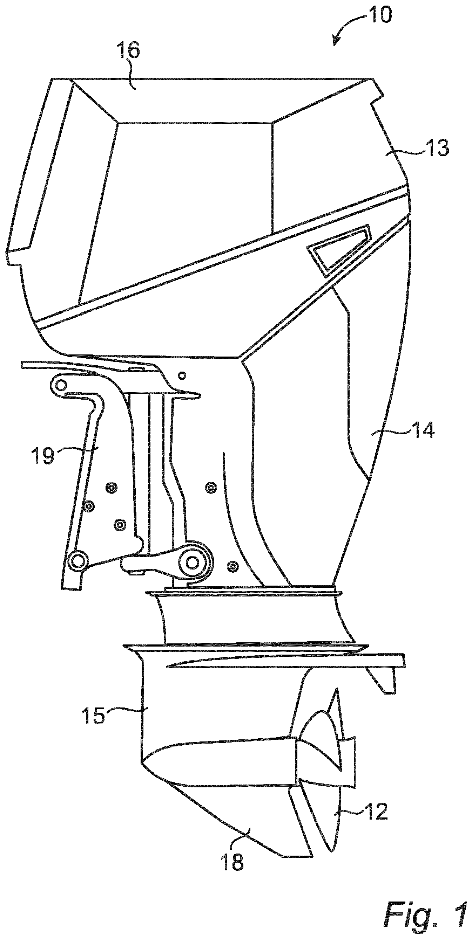

With reference to Figs. 1-3 an outboard motor 10 according to one embodiment of the invention is illustrated. The outboard motor 10 is a self-contained marine propulsion and steering device. The outboard motor 10 comprises an engine 11, a propeller 12 and a power coupling system for transferring rotational power from the engine 11 to the propeller 12. Hence, the outboard motor 10 is arranged for attachment to an outside of a transom of a marine vessel, such as a boat (not illustrated). The outboard motor 10 comprises a power head 13, a midsection 14 and a lower unit 15. The power head 13 includes the engine 11 and an engine housing 16, such as a cowling. The lower unit 15 includes a propeller shaft 17 and the propeller 12. For example, the lower unit 15 also includes a skeg 18 and other conventional parts, such as a torpedo-shaped part for the propeller shaft 17. The midsection 14 is formed as a leg connecting the power head 13 and the lower unit 15. Hence, the outboard motor 10 is arranged to be connected to a hull of a boat, so that the outboard motor 10 is arranged outside the hull, wherein the engine 11 and the power coupling system are arranged outside the boat or outside the hull of the boat. In the outboard motor 10 the engine 11 and the power coupling system are arranged outside the boat or outside the hull of the boat. For example, the outboard motor 10 comprises conventional fastening means for fastening the outboard motor 10 to the stern of the hull, such as the transom. The fastening means is, for example, arranged as a conventional mounting bracket 19. For example, the mounting bracket 19 comprises or is provided with a trim/tilt system, such as a hydraulic or electric trim/tilt system. For example, the trim/tilt system is conventional. Hence, the outboard motor 10 comprises a laterally extending trim axis, such as a horizontal trim axis, and a longitudinally extending steering axis, such as a vertical or substantially vertical steering axis (depending on trim). The entire outboard motor 10, except for the mounting bracket 19, i.e. including the engine 11, propeller 12 and power coupling system is turned around the steering axis for steering the marine vessel.

When the outboard motor 10 is operated the propeller shaft 17 and the propeller 12 are arranged below the water line 15 and, e.g., also below the hull. For example, the lower unit 15 is arranged below the hull during normal operation of the outboard motor 10. Hence, the outboard motor 10 is arranged to project a distance into the water when operated, so that the propeller 12, the lower unit and optionally a part of the midsection 14 are immersed in the water, so that the water line 15 is arranged above the propeller 12 and above the lower unit 15. Hence, the lower unit 15 is formed for efficient hydrodynamics. For example, the outboard 10 is arranged for a planing boat.

The engine 11 comprises a crankshaft 20 for output power in the form of rotational power, also called torque herein. For example, the engine11 is an internal combustion engine, such as a diesel engine. The outboard motor 10 of the present invention can handle a variety of output powers and can be arranged smaller or bigger as desired. However, the outboard motor 10 according to the described structure can handle high torque and still be hydrodynamic and efficient for use as an outboard motor 10. For example, the engine 11 is a high power engine able to develop at least 73,5 kW (100 horsepower, hp, 1 hp 735.49875 W). For example, the engine 11 is a 100-1000 horsepower (hp) engine, such as a 200-500 hp engine. For example, the crankshaft 20 is horizontal or substantially horizontal when the outboard motor 10 is operated for propelling a marine vessel. The crankshaft 20 is arranged substantially parallel to the propeller shaft 17. For example, the engine 11 is an automotive engine industrially produced, such as mass produced in series of at least thousands, for propelling an automobile, such as a car or a truck, and then adapted to marine applications. For example, the engine has a plurality of cylinders, such as 4, 6 or 8 cylinders. For example, the engine 11 is capable of outputting power at levels of 200 hp or 500 hp or above. For example, the engine 11 is turbocharged, intercooled and/or has a closed cooling system, optionally with electric starting. The engine 11 is mounted on an engine support structure 21. For example, the engine support structure 21 defines the top of the midsection 14.

The power coupling system comprises a first power transmission device 22, a gearbox 23 and a second power transmission device 24. The first power transmission device 22 is arranged for transferring rotational power from the crankshaft 20 to the gearbox 23. The second power transmission device 24 is arranged for transferring rotational power from the gearbox 23 to the propeller shaft 17. In the illustrated embodiment, the crankshaft 20 is arranged at the aft side of the engine 11, wherein the first power transfer device 22 is connected to the aft side of the engine 11. In the illustrated embodiment the gearbox 23, the second power transmission device 24 and at least a part of the propeller shaft are arranged below the engine 11.

The gearbox 23 comprises a transmission drive shaft 25, a forward gear 26, a reverse gear 27, a neutral position and an output drive shaft 28 for providing output power from the gearbox 23 to the second power transmission device 24. The gearbox 23 is operable in forward, neutral and reverse gears. Hence, the outboard motor 10 is arranged with a gearbox 23 so that the output power is reversible, such as fully reversible, wherein the propeller 12 can be driven in a forward mode as well as a reverse mode by the engine 11. Hence, the rotational power from the engine 11 can be transferred to the propeller shaft 17 in either rotational direction for full engine power forward or full engine power in reverse. Hence, a plurality of identical outboard motors 10 can be arranged on a boat to propel the boat by means of counter rotating propellers 12. Hence, the gearbox 23 is arranged to output rotational power in either direction, wherein the output drive shaft 28 can be rotated clockwise or counter-clockwise by power from the engine 11 and the propeller shaft 17 can be rotated in either direction. For example, the reverse gear 27 comprises an idler gear or a belt drive. The transmission drive shaft 25 and the output drive shaft 28 are arranged in parallel to the crankshaft 20 and the propeller shaft 17. The transmission drive shaft 25 and the output drive shaft 28 are arranged below the crankshaft 20. For example, the gearbox 23 is arranged below the powerhead 13 and below the engine 11. Further, the gearbox 23 is arranged above the waterline when the outboard motor 10 is propelling a marine vessel.

The power coupling system according to one embodiment of the invention also comprises a clutch, such as a hydraulic clutch, e.g. having a clutch housing with clutch discs connected to a hydraulic pump for the clutch. The clutch is for example arranged as a dog clutch, automotive clutch or any other conventional or special type of clutch. For example, the clutch is an automotive clutch industrially mass produced for automobiles, such as cars or trucks. For example, the gearbox 23 and the clutch are an electro-hydraulically operated system with two multi-plate clutch packages that allows for high torque and power transfer in both clockwise and counter-clockwise rotational directions. For example, the outboard motor 10 comprises Low Speed Control (LSC) that enables unprecedented control while mooring and low speed travel. LSC incorporates an electro-hydraulically operated clutch for smooth shifting between neutral, forward and reverse. LSC features sensor controlled propeller speed allowing for seamless control from zero to maximum rpm. According to one embodiment the gearbox 23 is provided with a trolling function, wherein the clutch is arranged to be able to slip so as to gradually reduce the rotational speed of the propeller 12 down to zero when the gearbox is in forward gear 26 or reverse gear 27. For example, the clutch comprises lamellas or a plate which can be slipped in both forward and reverse direction. For example, the clutch comprises a plurality of individually lamellas which can be slipped.

The first power transfer device 22 connects the crankshaft 20 with the transmission drive shaft 25 for transferring the output power from the crankshaft 20 to the transmission drive shaft 25. The first power transfer device 22 extends substantially perpendicular to the crankshaft 20 and is arranged for transferring rotational power in a direction substantially perpendicular to the crankshaft 20 and the transmission drive shaft 25 for transferring the rotational power from the crankshaft 20 to the transmission drive shaft 25 being arranged in parallel to and below the crankshaft 20. The first power transfer device 22 comprises an endless loop flexible drive coupling in the form of a toothed belt 29 connecting the crankshaft 20 and the transmission drive shaft 25. The crankshaft 20 and the transmission drive shaft 25 extend from a first side of the first power transfer device 22. For example, one end of the crankshaft 20 and one end of the transmission drive shaft 25 are connected to the first power transfer device 22. For example, the crankshaft 20 projects from an engine interior and away from the stern. The first power transfer device 22 is described in more detail below.

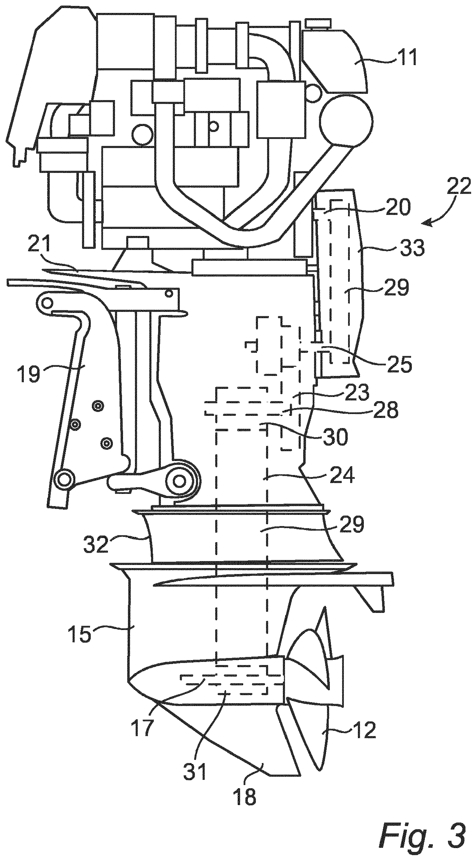

The second power transfer device 24 connects the output drive shaft 28 and the propeller shaft 17 and transfers rotational power from the output drive shaft 28 to the propeller shaft 17. The propeller shaft 17 is arranged below the output drive shaft 28 and substantially in parallel thereto, wherein the second power transfer device 24 extends perpendicular to the output drive shaft 28 and the propeller shaft 17. The second power transfer device 24 is arranged as an endless loop flexible drive coupling, such as a toothed belt. Hence, according to one embodiment the first power transfer device 22 comprises a first toothed belt, wherein the second power transfer device 24 is formed as a second toothed belt. Alternatively, the second power transfer device is arranged as one or more belts, chains or similar. The second power transfer device 24 is connected to a drive shaft pulley 30 and a propeller shaft pulley 31, which are indicated in Fig. 3 by dashed lines.

Hence, according to the illustrated the crankshaft 20, the transmission drive shaft 25, the output drive shaft 28 and the propeller shaft 17 are arranged in parallel or substantially in parallel. For example, the crankshaft 20, the transmission drive shaft 25, the output drive shaft 28 and the propeller shaft 17 are arranged horizontally or substantially horizontally when the outboard motor 10 is in a non-tilted operational position for propelling a marine vessel and the trim is neutral. According to one embodiment the crankshaft 20, transmission drive shaft 25, output drive shaft 28 of the second power transfer device 24 and the propeller shaft 17 are distributed along a common plane.

The outboard motor 10 comprises a drive housing 32 for receiving the power coupling system. The outboard motor 10 also comprises the engine housing 16 for receiving the engine 11. The drive housing 32 provides functions of structural support, spacing and enclosing for the power coupling system and also supports the propeller 12 through the propeller shaft 17 being supported by the drive housing 32. For example, the drive housing 32 extends from the engine support structure 21 to the skeg 18. The drive housing 32 is connected to a structure for pinching legs of the second power transfer device 24 together to reduce the cross-section of the outboard motor 10 below the water line to reduce drag. For example, said structure comprises curved surfaces bending the path of travel of the belt legs of the second power transmission device 24 together. Further, according to one embodiment of the present invention the drive housing 32 is formed for containing oil for the second power transmission device 24. Hence, the second power transmission device 24 is running in a partially oil filled housing. According to one embodiment of the invention the drive housing 32 is formed with a water inlet or a water pickup for cooling. The drive housing 32 is, for example, formed in a composite material or any other suitable material. According to one embodiment a part of the power coupling system is positioned in the drive housing 32. Hence, the gearbox 23, the output drive shaft 28 and the second power transfer device 24 are positioned in the drive housing 27. The propeller shaft 17 is positioned partially in the drive housing 32, wherein a portion thereof projects out from the drive housing 32 for carrying the propeller 12.

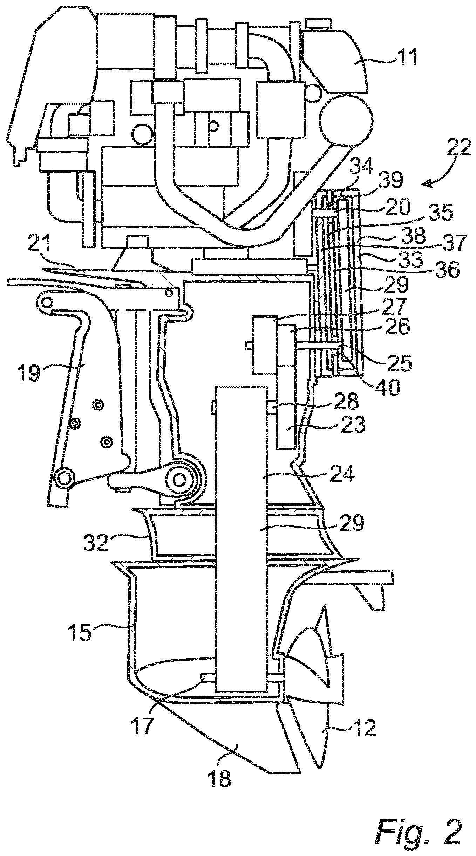

The engine housing 16 is illustrated in Fig. 1 and has been removed in Figs. 2 and 3. The engine housing 16 is arranged for receiving the engine 11 having the crankshaft 20 being horizontal or substantially horizontal when the outboard motor 10 is operated for propelling a marine vessel. The engine housing 16 is, e.g. formed for receiving the engine 11 in the form of the automotive engine as described above. For example, a fan is arranged under the engine housing 16 for improved ventilation. For example, the fan is a mechanical or electrical fan.

With reference to Fig. 2 the first power transfer device 22 is illustrated schematically in a simplified manner according to one embodiment. The first power transfer device 22 comprises the belt 29 as described above. In the illustrated embodiment, the first power transfer device 22 comprises a housing 33 having a first cavity 34 and a second cavity 35 separated from the first cavity 34 by a wall 36. The belt 29 is arranged in the first cavity 34. The first cavity 34 is provided with a first cooling liquid, such as oil, wherein the belt 29 is partially immersed in said first cooling liquid. For example, the first cooling liquid is provided in the bottom part of the first cavity 34. The second cavity 35 is provided with a second cooling liquid, such as water, coolant or a mixture thereof. The second cooling liquid is provided for cooling the wall 36 and thereby cooling the first cooling liquid and the belt 29 arranged in the first cavity 34. Hence, the belt 29 rotates in the first cavity 34, wherein the first cooling liquid lubricates and cools the belt 29.

For example, the housing 33 comprises a bracket 37 and a lid 38. The bracket 37 is attached to the engine 11, the engine support structure 21 or the drive housing 32, wherein the bracket 37 is arranged in a direction towards the engine 11. The bracket 37 and the wall 36 form the second cavity 35. The lid 38 and the wall 36 form the first cavity 34. For example, the lid 38 is connected to the bracket 37, directly or through the wall 36. In the illustrated embodiment the crankshaft 20 extends through the bracket 37 and through the wall 36 and into the first cavity 34 for transferring rotational power to the belt 29 arranged inside the first cavity 34. For example, the crankshaft 20 extends through an upper part of the wall 36 and into an upper part of the first cavity 34. The second cavity 35 is formed around a part of the crankshaft 20. Similarly, the second cavity 35 is formed around a part of the transmission drive shaft 25, wherein the transmission drive shaft 25 extends from the first cavity 34 and through the wall 36 to the gearbox 23. For example, the transmission drive shaft 25 extends through the bracket 37 and into the first cavity 34. For example, the transmission drive shaft 25 extends through a lower part of the wall 36 and into a lower part of the first cavity 34. Hence, the second cavity 35 is arranged between the first cavity 34 and a part of the engine 11 from which the crankshaft 20 projects, and also a part of the gearbox 23. According to one embodiment the first power transfer device 22 is a self-contained unit. For example, the first power transfer device 22 is detachable and removable from the crankshaft 20 and the transmission drive shaft 25.

The first power transmission device 22 is arranged with bearings, such as a first bearing or a first bearing set 39, and a second bearing or a second bearing set 40. The first and second bearing sets 39, 40 comprise, for example two bearings, and extend through the wall 36 between the first cavity 34 and the second cavity 35. For example, the first and second bearing sets 39, 40 also extend through the bracket 37, wherein the second cavity 35 is formed around the first and second bearing sets 39, 40, respectively. The cooling liquid inside the second cavity 35 is provided for cooling said first and second bearings 39, 40. The first and second bearings 39, 40 are provided with a liquid proof sealing to prevent leakage of the first cooling liquid from the first cavity 34 and for sealing the first cavity 35.

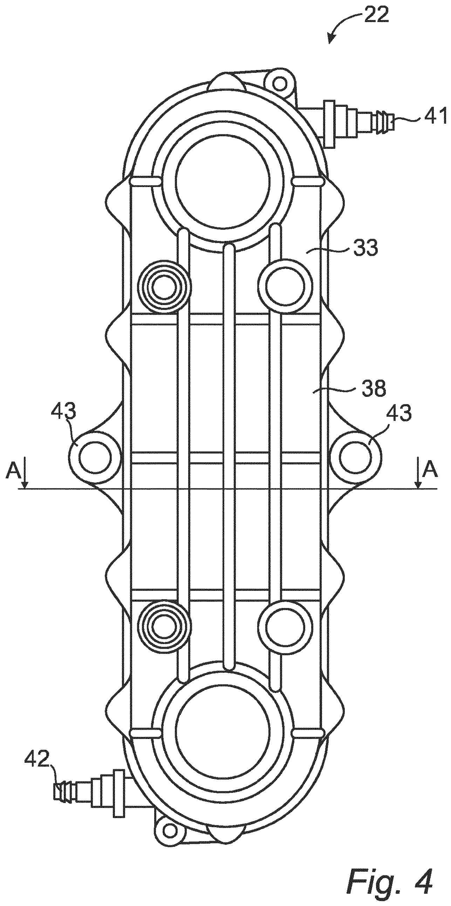

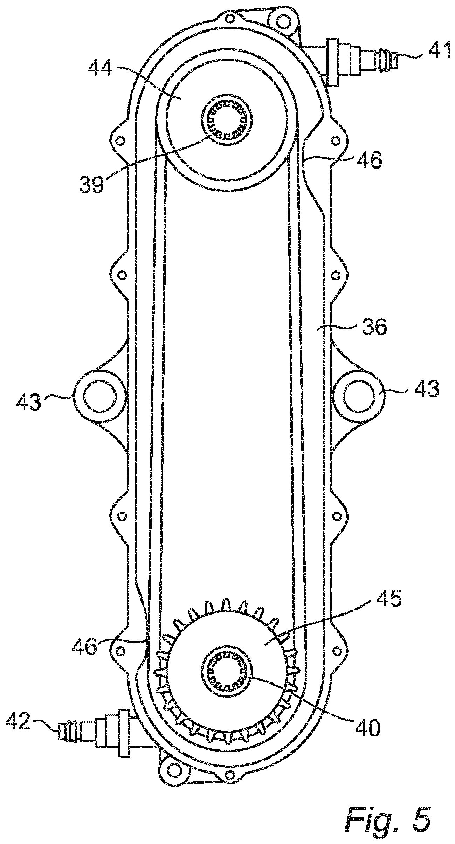

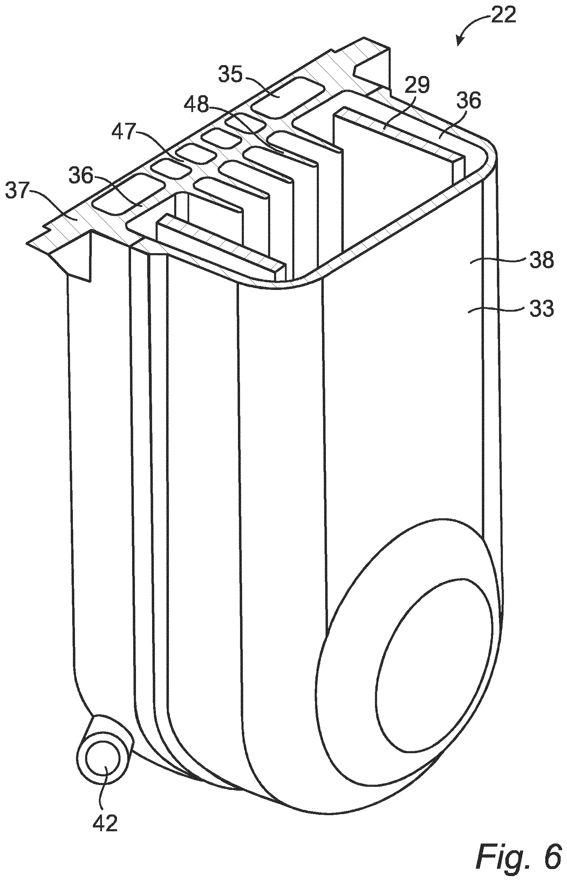

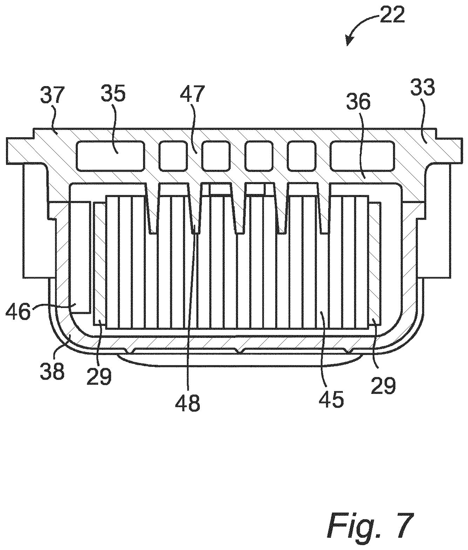

With reference to Figs. 4-8 embodiments of the first power transfer device 22 are illustrated more in detail, wherein the first power transfer device 22 is illustrated separately. In Fig. 4 an aft surface of the first power transfer device 22 is illustrated. Alternatively, the side illustrated in Fig. 4 is arranged in a forward or ahead direction for transferring power from a crankshaft 20 extending from the engine 11 in a forward direction. For example, in Fig. 4 the lid 38 covering the bracket 37 is illustrated. In Fig. 5 the interior of the first cavity 34 is illustrated. For example, in Fig. 5 the lid 38 or outer part of the lid 38 has been removed to illustrate the belt 29 and the interior of the first cavity 34 according to one embodiment. Figs. 6 and 7 are schematic and simplified cross section views along the line A-A in Fig. 4.

With reference primarily to Figs. 4 and 5 the first power transfer device 22 comprises a first coupling 41 with an inlet/outlet 41 to the second cavity 35, and a second coupling 42 with an inlet/outlet 42 from the second cavity 35 for the second cooling liquid, wherein the second cooling liquid can be circulated through the second cavity 35. In the illustrated embodiment the first and second couplings 41, 42 are arranged at opposite ends of the first power transfer device 22 so as to introduce the second cooling liquid at one end and leading the second cooling liquid out from the opposite second end. For example, the inlet is arranged at a top part of the first power transfer device 22, wherein the outlet is arranged at a bottom part of the first power transfer device 22. The first and second coupling 41, 42 are, e.g. arranged as couplings for a conduit, such as a hose or similar. For example, a pump (not illustrated) is arranged in the outboard motor 10 for circulating the second cooling liquid from a cooling liquid source, to the second cavity 35 through the conduit connected to the inlet, through the second cavity 35, out through the conduit connected to the outlet and back to the cooling liquid source. The cooling liquid source is, e.g. a tank comprising the second cooling liquid, such as water or a cooling liquid comprising a coolant such as glycol or similar. Alternatively, the cooling liquid source is the sea, wherein sea water is pumped or conducted through the second cavity 35. In the illustrated embodiment the first and second couplings 41, 42 are arranged symmetrically on opposite ends and on opposite sides of the first power transfer device 22, wherein the first power transfer device 22 is formed with a rotational symmetry.

In the illustrated embodiment the first power transfer device 22 is formed with fastening means 43, such as screw holes, bolt holes or similar, for fastening to the remaining parts of the outboard motor 10, such as the engine 11, engine support structure 21, the drive housing 32 or any other suitable part thereof. The fastening means 43 are arranged on opposite sides of the first power transfer device 22, such as on opposite sides of the bracket 37, wherein the fastening means 43 are arranged symmetrically so that the first power transfer device 22 is formed with a rotational symmetry. For example, the first power transfer device 22 is mounted with flexible fastening means, such as rubber bushings, to lower the stress in the crankshaft 20 and the transmission drive shaft 25, which stress can be caused by small misalignments due to tolerance errors in manufacturing or assembly of the different parts of the outboard motor 10. In an embodiment wherein the first power transfer device 22 is self-contained with the bearings 39, 40 mounted into the housing 33, there will be no resulting radial forces from the belt 29 acting on the crankshaft 20 and the transmission drive shaft 25 or fastening means, only momentum will be transferred. Therefore there can be a flexible fastening means mounted between a rubber mounted engine 11 or gearbox 23 and the first power transfer device 22. The flexible fastening means cannot handle radial forces but can withstand small radial movement and high rotational vibrations from the engine 11 without transferring these to the gearbox 23.

According to the embodiment of Fig. 5 the first power transfer device 22 comprises a first pulley 44 and a second pulley 45 for interaction with the belt 29, wherein the belt 29 engages the first and second pulleys 44, 45. The first and second pulleys 44, 45 are arranged inside the first cavity 34. One of said first and second pulleys 44, 45 is connected to the crankshaft 20, wherein the other of said first and second pulleys 44, 45 is connected to the transmission drive shaft 25. The first and second pulleys44, 45 are, e.g. toothed pulleys for engaging the belt 29, wherein the pulley 44, 45 connected to the crankshaft 20 drives the belt 29 and wherein the belt 29 drives the pulley 44, 45 connected to the transmission drive shaft 25. According to one embodiment, the first and second pulleys 44, 45 are arranged with different sizes, wherein the size of the first pulley 44 is different from the size of the second pulley 45. For example, the first pulley 44 is smaller than the second pulley 45. For example, the first pulley 44 has a smaller number of teeth than the second pulley 45. The first power transfer device 22 is arranged with an imaginary axis of rotation in the centre between the first and second pulleys 44, 45, i.e. in the centre between the crankshaft 20 and the transmission drive shaft 25. Said axis of rotation extends in parallel to the crankshaft 20 and the transmission drive shaft 25, wherein the first power transmission device 22 is detachable and rotatable around said axis of rotation. Hence, the first power transmission device is removable from the remaining parts of the outboard motor 10, rotatable 180 degrees and then connectable to the remaining parts of the outboard motor 10 so as to change position of the pulleys 44, 45 connected to the crankshaft 20 and the transmission drive shaft 25 respectively. Hence, the first and second pulleys 44, 45 are optionally connectable to the crankshaft 20 and the transmission drive shaft 25 to change the gear ratio of power transmission between high torque and high speed. Hence, the first power transfer device 22 is arranged as a distinct unit, which is removable and detachably connectable to the crankshaft 20 and transmission drive shaft 25, wherein the first power transfer device 22 is easy changeable. For example, by turning the first power transfer device 22 180 degrees and thereby changing the positions of the first and second pulleys the gear ratio is changeable as low as 1,29. For example, the crankshaft 20 and the transmission drive shaft 25 are arranged with similar splines for engaging corresponding splines of the first and second pulleys 44, 45, wherein the first power transfer device 22 can be pulled off the crankshaft 20 and the transmission drive shaft 25 and then turned 180 degrees and then pushed back onto the splined crankshaft 20 and the splined transmission drive shaft 25. For example, the belt 29 and the bearings 39, 40 are arranged in the first cavity 34 that is sealed from the surrounding environment. For example the first cavity 34 is sealed from the surrounding environment by only two radial seals.

With reference to Fig. 5 belt guides 46 are arranged in the first cavity 34 for guiding the belt 29 and preventing the belt 29 from disengaging the first and second pulleys 44, 45. According to the illustrated embodiment the belt guides 46 are protrusions extending from the internal periphery of the housing 33 and into the first cavity 34. For example, the belt guides 46 are fixed inside the housing 33, such as machined protrusions of the housing 33 forming belt guiding surfaces. In the illustrated embodiment, a first belt guide is arranged at the first pulley 44, wherein a second belt guide is arranged at the second pulley 45. One of the belt guides 46 is arranged at the slack side of the belt 29 to engage an outer side of the belt 29 if required. The other of the belt guides 46 is arranged on the opposite side of the housing 33 to be arranged at a slack side if the first power transfer device 22 is rotated 180 degrees. For example, the belt guides 46 are arranged so that they do not normally engage the belt 29, i.e. with a small gap between the belt guides 46 and the belt 29 when the belt 29 is fully engaged with the pulleys 44, 45. The gap is adapted to the teeth of the belt 29 and pulleys 44, 45, wherein the belt 29 engages the belt guide 46 before disengaging the pulley 44, 45. Hence, the belt guide 46 and the belt 29 are arranged so that the belt 29 is prevented from climbing on the teeth of the pulleys 44, 45. For example, the first cooling liquid is provided for lubricating the belt 29 and reducing any friction between the belt 29 and the belt guides 46. For example, the first power transfer device 22 does not have a tensioner pulley. For example, the first and second pulleys 44, 45 are arranged with a fixed center to center distance in relation to each other. According to one embodiment the bearings 39, 40 are conical bearings, wherein the belt 29 is provided with tension when the pulleys 44, 45 with the bearings 39, 40 are pushed into position on the crankshaft 20 and the transmission drive shaft 25 and the bearings 39, 40 supporting the pulleys 44, 45 thereby are aligned into the desired center to center distance.

With reference to Figs. 6 and 7 the belt housing 33 is provided with fins 47 in the second cavity 35 to increase the surface of the belt housing 33 that is exposed to the second cooling liquid, such as water, and thereby increase the heat transfer. For example, the bracket 37 is formed with the fins 47. For example, the fins 47 extend across the second cavity 35 dividing the second cavity 35 into channels for the second cooling liquid. Alternatively, the fins 47 extend from the wall 36 dividing the first and second cavities 34, 35. In the illustrated embodiment the belt housing 33 is provided with flanges 48 in the first cavity 34 to increase the surface of the belt housing 33 exposed to the first cooling liquid, such as the oil, and thereby increase heat transfer from the first cooling liquid to the belt housing 33. The flanges 48 extending in the first cavity 34 also act as separator of the first cooling liquid to lower the turbulence energy in the first cooling liquid resulting in lowering the friction and heat generated by turbulence. The flanges 48 extend from the wall 36 and into the first cavity 34 between the pulleys 44, 45. Hence, the fins 47 and the flanges 48 extend from opposite sides of the wall 36.

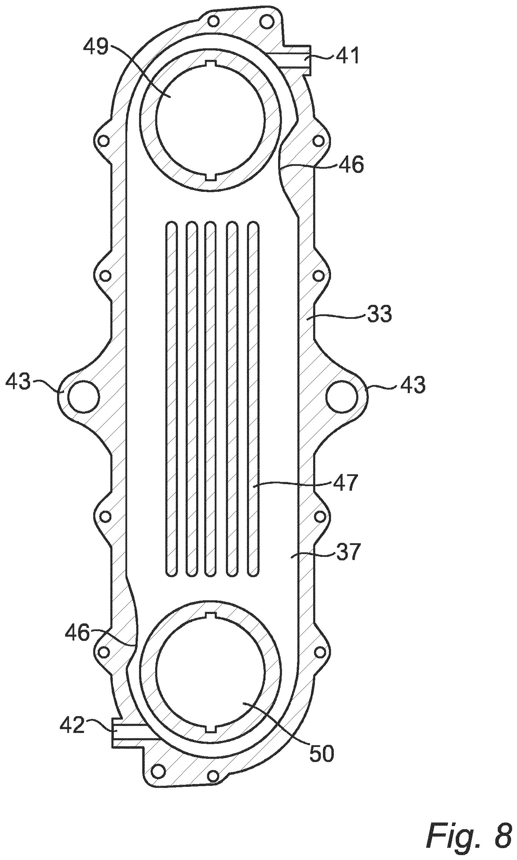

With reference to Fig. 8 a part of the housing 33 is illustrated schematically, wherein the second cavity 35 is visible. For example, Fig. 8 illustrates a part of the bracket 37, wherein the wall 36 has been removed. The bracket 37 is arranged with the first and second couplings 41, 42 for providing an inlet and an outlet for a flow of the second cooling liquid to the second cavity 35. The bracket 37 is provided with the fins 47 as described above. The bracket 37 is formed with a first through aperture 49 and a second through aperture 50 for the crankshaft 20 and the transmission drive shaft 25. For example, the first and second apertures 49, 50 are arranged for receiving the bearings 39, 40. The second cavity 35 is formed around the first and second apertures 49, 50, wherein the first and second apertures 49, 50 are separated from the second cavity 35. Hence, the second cooling liquid circulating in the second cavity 35 flows around the first and second apertures 49, 50 and cools the crankshaft 20 and the transmission drive shaft 25 or the first and second bearings 39, 40 connecting the crankshaft 20 and the transmission drive shaft 25 to the pulleys 44, 45 arranged in the first cavity 34. For example, the centers of the first and second apertures 49, 50 are aligned with each other and arranged at the same distances from a center of the first power transmission device 22, so that the first power transmission device 22 is arranged with a rotational symmetry as described above.

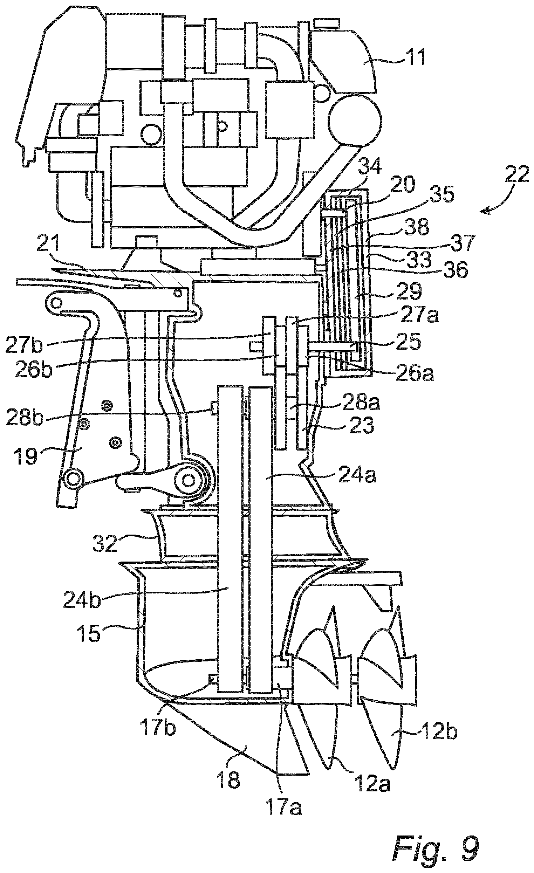

With reference to Fig. 9 the outboard motor 10 according to one embodiment is illustrated, wherein the outboard motor 10 comprises first and second propellers 12a, 12b in the form of dual counter rotating propellers. In the embodiment of Fig. 9 the second power transfer device comprises a first belt 24a and a second belt 24b. For example, the first and second belts 24a, 24b are substantially arranged in parallel. The gearbox 23 is connected to first and second drive shafts 28a, 28b in the form of dual drive shafts for driving the first and second belts 24a, 24b, respectively. The drive shafts 28a, 28b are, e.g. concentric and arranged to rotate in opposite directions when torque is applied to the drive shafts 28a, 28b from the gearbox 23. For example, the first belt 24a is connected to the first output drive shaft 28a, wherein the second belt 24b is connected to the second output drive shaft 28b. Further, according to the embodiment of Fig. 9 the outboard motor 10 comprises first and second propeller shafts 17a, 17b in the form of dual propeller shafts. For example, the first and second propeller shafts 17a, 17b are concentric and arranged to rotate in opposite directions to rotate the first and second propellers 12a, 12b in opposite directions. For example, the first belt 24a is connected to the first propeller shaft 17a for driving the first propeller 12a, wherein the second belt 24b is connected to the second propeller shaft 17b for driving the second propeller 12b. For example, the gearbox 23 comprises a first forward gear 26a and a first reverse gear 27a for driving the first drive shaft 28a, and a second forward gear 26b and a second reverse gear 27b for driving the second drive shaft 28b. The first and second forward gears 26a, 26b and the first and second reverse gears 27a, 27b are connected to the transmission drive shaft 25 being rotated by the first power transfer device 22 as described above. According to one embodiment a fence (not illustrated) is arranged between the first belt 24a and the second belt 24b to reduce turbulence in the oil engaging said belts 24a, 24b inside the drive housing 32.

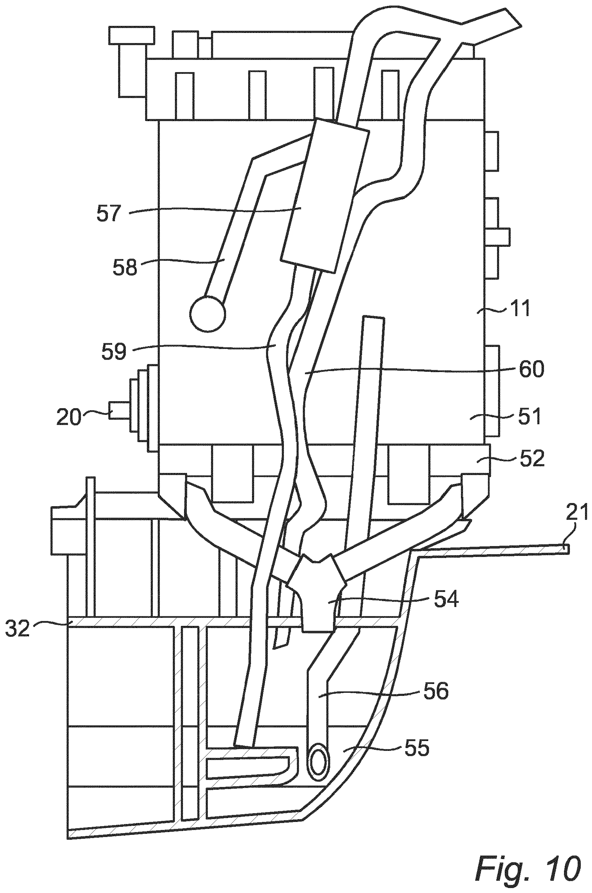

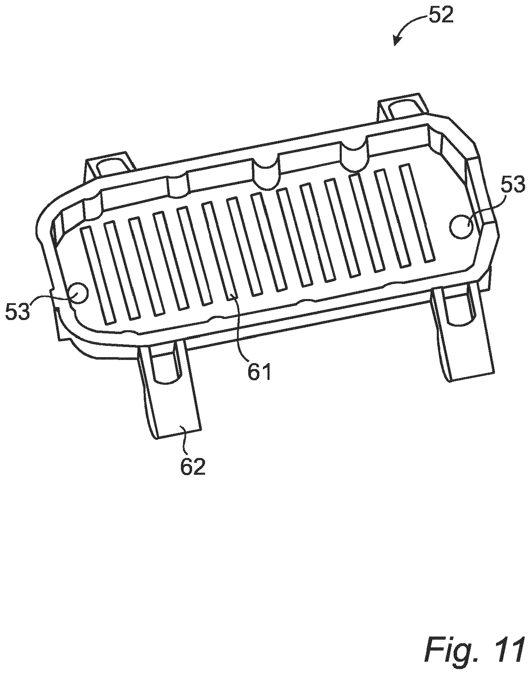

With reference to Fig. 10 a part of the outboard motor 10 is illustrated according to one embodiment. The engine11 is mounted on the engine support structure 21 and a part of the drive housing 32 is illustrated. The engine 11 comprises the crankshaft 20. In Fig. 10 the power transfer system such as the first power transfer device 22, the gearbox 23 and the second power transfer device 24 have been removed or are not visible. The engine 11 comprises a crankcase 51 for the crankshaft 20, wherein the crankcase 51 is connected to an oil pan 52. Oil is circulated and pressurized by means of an oil pump (not illustrated), such as an internal, single oil pump of the engine 11. For example, the oil pan 52 is mounted on a bottom part of the crankcase 51. The oil pan 52, which is illustrated more in detail in Fig. 11, is formed with one or more outlet openings 53 for oil. In the illustrated embodiment the oil pan 52 comprises two outlet openings 53 arranged at opposite ends of the oil pan 52, so that oil will be evacuated from the oil pan 52 when the outboard motor 10 is inclined in different directions. The outlet opening or outlet openings 53 is/are connected to a conduit 54, such as a pipe or a hose, leading to an oil reservoir 55. For example, the oil reservoir 55 is arranged below the oil pan 52. For example, the oil reservoir 55 is arranged separately from the engine 11 and the oil pan 52. In the illustrated embodiment the oil reservoir 55 is arranged in the drive housing 32 below the engine 11 and below the engine support structure 21. Hence, the oil pan 52 is arranged for collecting oil from the crankcase 51, wherein the oil is lead to the oil reservoir 55 through the one or more outlet openings 53 and the corresponding conduits 54, e.g. by means of gravity. The oil pump of the engine 11 is arranged to pump oil from the oil reservoir 55 through an oil conduit 56, such as a pipe or hose, to the engine 11. For example, the single internal oil pump of the engine 11, such as the ordinary oil pump of an automotive diesel engine for the car or truck industry, is used for pumping oil from the oil reservoir 55 and into the engine 11.

According to one embodiment the engine 11 comprises a crankcase ventilation system. In the illustrated embodiment, the crankcase ventilation system comprises an oil cyclone separator 57 provided to separate oil from crankcase gases to reduce oil consumption and reduce exhaust emissions. Hence, the oil cyclone separator 57 is connected to the crankcase 51 or other suitable part of the engine 11 through an inlet conduit 58 for conducting crankcase gases from the crankcase 51, wherein the oil cyclone separator 57 separates oil in the crankcase gases. The oil cyclone separator 57 is connected to the oil reservoir 55 through an oil outlet conduit 59 for leading oil recovered by the oil cyclone separator 57 to the oil reservoir 55.

In the embodiment of Fig. 10 the oil reservoir 55 is connected to an evacuation conduit 60 for evacuating crankcase gases entering the oil reservoir 55 from the crankcase 51. Hence, crankcase gases can flow out from the oil pan 52 through the outlet openings 53 for oil and are conducted down to the separate oil reservoir 55 through the conduits 54. Then, said crankcase gases are lead out from the oil reservoir 55 through the evacuation conduit 60.

With reference to Fig. 11 the oil pan 52 and the interior thereof is illustrated schematically according to one embodiment, wherein the oil pan 52 has been separated from the crankcase 51. In the embodiment of Fig. 11 the oil pan 52 comprises an oil scraper 61, such as a crankshaft oil scraper, for removing oil from the crankshaft 20.

In the embodiment of Fig. 11 the oil pan 52 comprises mounts 62 for mounting the oil pan 52 on the engine support structure 21. For example, the engine 11 is arranged on flexible mounts through the oil pan 52, such as through the mounts 62 thereof. For example, the flexible mounts are arranged between the engine support structure 21 and the mounts 62 of the oil pan 52. The flexible mounts are, for example, rubber mounts.

According to one embodiment an oil cooler (not illustrated) is provided. The oil cooler is arranged for cooling motor oil. For example, the oil cooler is arranged after the oil pump for cooling the oil from the oil reservoir 55. For example, the oil cooler is cooled by sea water, such as sea water provided by the sea water pump. Alternatively, the oil cooler is cooled by the closed cooling system of the engine 11.

According to one embodiment, the engine 11 comprises an optional turbocharger (not illustrated). For example, the turbocharger is arranged with an exhaust gas housing for exhaust gases. Said exhaust gas housing is provided with water cooling. For example, the exhaust gas housing is cooled by sea water provided by the sea water pump. Alternatively, the exhaust gas housing is cooled by a closed cooling system of the engine 11 or by a separate cooling system. Alternatively, the exhaust gas housing is provided with insulation to keep heat in the turbocharger.

According to one embodiment the engine 11 comprises a sea water pump (not illustrated). For example, the engine 11 comprises a single sea water pump and a single water pump for the closed cooling system. The sea water pump is, e.g. driven by the engine 11, i.e. by power generated by the operation of engine pistons in the cylinders. For example, the sea water pump is directly or indirectly connected to the crankshaft 20, wherein the sea water pump is operated by power take off from the crankshaft 20. For example, the sea water pump is arranged for providing cooling water to one or more parts of the engine 11. According to one embodiment, the engine 11 comprises an intercooler or aftercooler cooled by sea water, such as sea water provided by the sea water pump.

According to one embodiment the engine 11 comprises a flywheel (not illustrated). As a general principle engines of this type comprises a flywheel. The flywheel is, e.g. mounted on the crankshaft 20. For example, the flywheel is arranged on an aft side of the engine 11. Alternatively, the flywheel is arranged on a forward side of the engine 11. According to one embodiment, the flywheel is provided with a vibration damper, such as a torsion oscillation damper, to reduce torsional vibrations in the structure. The vibration damper is, e.g. mounted on the flywheel.

According to one embodiment the engine 11 comprises an exhaust system having exhaust manifolds (not illustrated). The exhaust manifolds are water cooled. The exhaust manifolds are cooled by sea water provided by the sea water pump or by water/coolant provided by the closed cooling system.

The engine 11 is, for example, provided with an after-treatment system for reducing emission of exhaust gases. Such an after-treatment system can be modular, wherein the engine 11 optionally can be provided with one or more of such systems. For example, the after-treatment modules, such as catalysts, diesel particle filter, selective catalytic reduction, exhaust gas recirculation system, are arranged under the engine housing 16 or inside the drive housing 32, such as in the midsection 14 of the outboard motor 10.

According to one embodiment the drive housing 32 is provided with an exhaust outlet (not illustrated) for exhaust gases from the engine 11. For example, the exhaust outlet is arranged above the propeller 12. Alternatively or in addition, the center of the propeller 12 is arranged with an exhaust outlet for a part of the exhaust gases or for all of it.

According to one embodiment the engine 11 comprises a fuel return system. The fuel return system comprises a return fuel tank (not illustrated) for receiving and cooling excess fuel, e.g. from a fuel system of the engine 11 for supplying the cylinders with fuel. The return fuel tank is arranged inside the engine housing 16 or inside the drive housing 32. For example, the return fuel tank is connected to the fuel system, eliminating the need for a fuel return line to a main fuel tank. Hence, in this particular embodiment the outboard motor 10 comprises a main fuel tank and the return fuel tank, the return fuel tank being separate from the main fuel tank. Fuel is conducted from the main fuel tank to the fuel system and from the return fuel tank to the fuel system.

Hence, disclosed herein as an example being not part of the invention is also a method for changing gear ratio of an outboard motor 10 comprising an engine 11, a gearbox 23 and a propeller 12 connected to a propeller shaft 17, wherein the engine 11 comprises a crankshaft (20) connected to a transmission drive shaft 25 of the gearbox 23 through a first power transfer device 22, wherein an output drive shaft 28 of the gearbox 23 is connected to the propeller shaft 17 through a second power transfer device 24, and including in the steps of
a) detaching the first power transfer device 22 from the remaining parts of the outboard motor 10, said first power transfer device 22 including a housing 33 with a belt 29 connected to a first pulley 44 and a second pulley 45, wherein the first and second pulleys 44, 45 are of different sizes,
b) pulling the first power transfer device 22 along and away from the crankshaft 20 and transmission drive shaft 25 to disengage the first pulley 44 and the second pulley 45 from the crankshaft 20 and the transmission drive shaft 25,
c) rotating the first power transfer device 22 180 degrees around a rotational symmetry center of the first power transmission device 22 to change positions of the first and second pulleys 44, 45 in relation to the crankshaft 20 and the transmission drive shaft 25,
d) pushing the first power transfer device 22 onto the crankshaft 20 and transmission drive shaft 25 to engage the first and second pulleys 44, 45 therewith, and
attaching the first power transfer device 22 to the remaining parts of the outboard motor 10.

Said method can also comprise the steps of disengaging a first cooling liquid conduit from a first coupling 41 with an inlet or outlet of a cooling liquid cavity 35 of the first power transmission device 22, disengaging a second cooling liquid conduit from a second coupling 42 with an inlet or outlet of the cooling liquid cavity 35, and
after rotating the first power transfer device 22, connecting the first cooling liquid conduit to the second coupling 42 and the second cooling liquid conduit to the first coupling 41.

## Claims

1. An outboard motor (10) comprising an engine (11), a gearbox (23) and a propeller (12) connected to a propeller shaft (17), wherein the engine(11) comprises a substantially horizontal crankshaft (20) connected to a transmission drive shaft (25) of the gearbox (23) through a first power transfer device (22), wherein an output drive shaft (28) of the gearbox (23) is connected to the propeller shaft (17) through a second power transfer device (24), and wherein the outboard motor (10) comprises an oil reservoir (55) and an oil pump arranged for pumping oil from the oil reservoir (55) to the engine (11) through a conduit (56),
***characterised* in**
**that** the engine (11) comprises an oil pan (52) formed with a first outlet opening (53) for oil and a second outlet opening (53) for oil;
**that** the outlet openings are arranged at opposite ends of the oil pan (52);
**that** the first and second outlet opening (53) is connected to a conduit (54) leading to the oil reservoir (55);
**that** the oil reservoir (55) is arranged separately from the engine (11) and the oil pan (52); and
**that** the oil pan (52) is provided with a crankshaft oil scraper (61) for removing oil from the crankshaft.

2. The outboard motor of claim 1, wherein the oil reservoir (55) is arranged below the oil pan (52).

3. The outboard motor of any of the preceding claims, wherein a single oil pump is provided for pumping the oil from the oil reservoir (55) to the engine.

4. The outboard motor of any of the preceding claims, wherein the oil pump is an internal oil pump of the engine (11).

5. The outboard motor of any of the preceding claims, wherein the engine (11) is provided with an oil cyclone separator (57) having an oil outlet connected to the oil reservoir (55) through an oil outlet conduit (59) for returning recovered oil to the oil reservoir (55).

6. The outboard motor of any of the preceding claims, wherein the oil reservoir (55) is connected to an evacuation conduit (60) for evacuating crankcase gases entering the oil reservoir (55) from the crankcase (51).

7. The outboard motor of any of the preceding claims, wherein the oil reservoir (55) is arranged in a drive housing (32) of the outboard motor (10) below the engine (11) and below an engine support structure (21) of the outboard motor (10).

8. The outboard motor of any of the preceding claims, comprising a power head (13), a midsection (14) and a lower unit (15), wherein the power head (13) includes the engine (11) and an engine housing (16), wherein the lower unit (15) includes the propeller shaft (17) and the propeller (12), wherein the midsection (14) is formed as a leg connecting the power head (13) and the lower unit (15), and wherein the oil reservoir (55) is arranged in the midsection (14).

9. The outboard motor of any of the preceding claims, wherein the oil pan (52) comprises mounts (62) for mounting the oil pan (52) on the engine support structure (21).

## Patentansprüche

1. Außenbordmotor (10), der eine Antriebsmaschine (11), ein Getriebe (23) sowie einen mit einer Propellerwelle (17) verbundenen Propeller (12) umfasst, wobei die Antriebsmaschine (11) eine im Wesentlichen horizontale Kurbelwelle (20) umfasst, die über eine erste Kraftübertragungsvorrichtung (22) mit einer Getriebe-Antriebswelle (25) des Getriebes (23) verbunden ist, wobei eine Ausgangs-Antriebswelle (28) des Getriebes (23) über eine zweite Kraftübertragungsvorrichtung (24) mit der Propellerwelle (17) verbunden ist und der Außenbordmotor (10) einen Ölbehälter (55) sowie eine Ölpumpe umfasst, die so eingerichtet ist, dass sie Öl von dem Ölbehälter (55) über eine Leitung (56) zu der Antriebsmaschine (11) pumpt,
**dadurch gekennzeichnet, dass**
die Antriebsmaschine (11) eine Ölwanne (52) umfasst, die mit einer ersten Auslassöffnung (53) für Öl und einer zweiten Auslassöffnung (53) für Öl versehen ist;
die Auslassöffnungen an einander gegenüberliegenden Enden der Ölwanne (52) angeordnet sind;
die erste und die zweite Auslassöffnung (53) mit einer Leitung (54) verbunden sind, die zu dem Ölbehälter (55) führt;
der Ölbehälter (55) separat von der Antriebsmaschine (11) und der Ölwanne (52) angeordnet ist; und
die Ölwanne (52) mit einem Kurbelwellen-Ölabstreifer (61) zum Entfernen von Öl von der Kurbelwelle versehen ist.

2. Außenbordmotor nach Anspruch 1, wobei der Ölbehälter (55) unterhalb der Ölwanne (52) angeordnet ist.

3. Außenbordmotor nach einem der vorangehenden Ansprüche, wobei eine einzelne Ölpumpe zum Pumpen des Öls von dem Ölbehälter zu der Antriebsmaschine (55) vorhanden ist.

4. Außenbordmotor nach einem der vorangehenden Ansprüche, wobei die Ölpumpe eine interne Ölpumpe der Antriebsmaschine (11) ist.

5. Außenbordmotor nach einem der vorangehenden Ansprüche, wobei die Antriebsmaschine (11) mit einem Öl-Zyklonabscheider (57) versehen ist, der einen Ölauslass aufweist, der mit dem Ölbehälter (55) über eine Öl-Auslassleitung (59) zum Zurückleiten von zurückgewonnenem Öl zu dem Ölbehälter (55) verbunden ist.

6. Außenbordmotor nach einem der vorangehenden Ansprüche, wobei der Ölbehälter (55) mit einer Entlüftungsleitung (60) zum Ableiten von Kurbelgehäuse-Gasen verbunden ist, die aus dem Kurbelgehäuse (51) in den Ölbehälter (55) gelangen.

7. Außenbordmotor nach einem der vorangehenden Ansprüche, wobei der Ölbehälter (55) in einem Antriebsgehäuse (32) des Außenbordmotors (10) unterhalb der Antriebsmaschine (11) und unterhalb einer Antriebsmaschinen-Tragestruktur (21) des Außenbordmotors (10) angeordnet ist.

8. Außenbordmotor nach einem der vorangehenden Ansprüche, der einen Kraftkopf (13), einen Mittelabschnitt (14) sowie eine untere Einheit (15) umfasst, wobei der Kraftkopf (13) die Antriebsmaschine (11) und ein Gehäuse (16) der Antriebsmaschine einschließt, die untere Einheit (15) die Propellerwelle (17) und den Propeller (12) enthält, der Mittelabschnitt (14) als ein Schenkel ausgebildet ist, der den Kraftkopf (13) und die untere Einheit (15) verbindet, und der Ölbehälter (55) in dem Mittelabschnitt (14) angeordnet ist.

9. Außenbordmotor nach einem der vorangehenden Ansprüche, wobei die Ölwanne (52) Halterungen (62) zum Anbringen der Ölwanne (52) an der Antriebsmaschinen-Tragestruktur (21) umfasst.

## Revendications

1. Moteur hors-bord (10) comprenant un moteur (11), une boîte de vitesses (23) et une hélice (12) reliée à un arbre d'hélice (17), dans lequel le moteur (11) comprend un vilebrequin (20) sensiblement horizontal relié à un arbre d'entraînement de transmission (25) de la boîte de vitesses (23) à travers un premier dispositif de transfert de puissance (22), dans lequel un arbre d'entraînement de sortie (28) de la boîte de vitesses (23) est relié à l'arbre d'hélice (17) à travers un second dispositif de transfert de puissance (24), et dans lequel le moteur hors-bord (10) comprend un réservoir d'huile (55) et une pompe à huile agencée pour pomper de l'huile du réservoir d'huile (55) vers le moteur (11) à travers un conduit (56),
**caractérisé en ce**
**que** le moteur (11) comprend un carter d'huile (52) formé avec une première ouverture de sortie (53) d'huile et une seconde ouverture de sortie (53) d'huile ;
**que** les ouvertures de sortie sont agencées à des extrémités opposées du carter d'huile (52) ;
**que** les première et seconde ouvertures de sortie (53) sont reliées à un conduit (54) conduisant au réservoir d'huile (55) ;
**que** le réservoir d'huile (55) est agencé séparément du moteur (11) et du carter d'huile (52) ; et
**que** le carter d'huile (52) est pourvu d'un racleur d'huile de vilebrequin (61) pour retirer l'huile du vilebrequin.

2. Moteur hors-bord selon la revendication 1, dans lequel le réservoir d'huile (55) est agencé au-dessous du carter d'huile (52).

3. Moteur hors-bord selon l'une quelconque des revendications précédentes, dans lequel une pompe à huile unique est prévue pour pomper l'huile du réservoir d'huile (55) vers le moteur.

4. Moteur hors-bord selon l'une quelconque des revendications précédentes, dans lequel la pompe à huile est une pompe à huile interne du moteur (11).

5. Moteur hors-bord selon l'une quelconque des revendications précédentes, dans lequel le moteur (11) est pourvu d'un séparateur cyclonique d'huile (57) ayant une sortie d'huile reliée au réservoir d'huile (55) à travers un conduit de sortie d'huile (59) pour retourner l'huile récupérée au réservoir d'huile (55).

6. Moteur hors-bord selon l'une quelconque des revendications précédentes, dans lequel le réservoir d'huile (55) est relié à un conduit d'évacuation (60) pour évacuer des gaz de carter entrant dans le réservoir d'huile (55) depuis le carter (51).

7. Moteur hors-bord selon l'une quelconque des revendications précédentes, dans lequel le réservoir d'huile (55) est agencé dans un logement d'entraînement (32) du moteur hors-bord (10) au-dessous du moteur (11) et au-dessous d'une structure de support de moteur (21) du moteur hors-bord (10).

8. Moteur hors-bord selon l'une quelconque des revendications précédentes, comprenant une tête de puissance (13), une partie centrale (14) et une unité inférieure (15), dans lequel la tête de puissance (13) inclut le moteur (11) et un logement de moteur (16), dans lequel l'unité inférieure (15) inclut l'arbre d'hélice (17) et l'hélice (12), dans lequel la partie centrale (14) est formée en tant qu'un tronçon reliant la tête de puissance (13) et l'unité inférieure (15), et dans lequel le réservoir d'huile (55) est agencé dans la partie centrale (14).

9. Moteur hors-bord selon l'une quelconque des revendications précédentes, dans lequel le carter d'huile (52) comprend des montures (62) pour monter le carter d'huile (52) sur la structure de support de moteur (21).
